# EUROPÄISCHE PATENTANMELDUNG

(11) **EP 4 697 236 A1**
(43) Veröffentlichungstag der Anmeldung: **18.02.2026**
(21) Anmeldenummer: 24194564.1
(22) Anmeldetag: 14.08.2024
(51) Int. Cl.: G06N 3/0475, G06N 3/09, G06V 20/56, G06V 20/70

(54) **VERFAHREN ZUM GENERIEREN EINES DATENSATZES ZUM TRAINING UND/ODER TESTEN EINES MASCHINELLEN LERNSYSTEMS**

(71) Anmelder: Robert Bosch GmbH, 70469 Stuttgart (DE); CARIAD SE, 38440 Wolfsburg (DE)
(72) Erfinder: Borges, Julio, 70176 Stuttgart (DE); Laube, Kevin Alexander, 72108 Rottenburg am Neckar (DE); Kugele, Alexander, 70806 Kornwestheim (DE); Cheng, Shin-I, 70190 Stuttgart (DE); Youett, Evgenia, 38440 Wolfsburg (DE)
(74) Vertreter: Bösherz Goebel Patentanwälte

(57) **Zusammenfassung**

Die Erfindung betrifft ein Verfahren (100) zum Generieren eines Datensatzes (60) zum Training und/oder Testen eines maschinellen Lernsystems (50), umfassend:
- Bereitstellen (101) von Bilddaten, welche für Abbildungen spezifisch sind, in welchen unterschiedliche Umgebungsszenarien dargestellt werden,
- Bereitstellen (102) von Metadaten (65), welche für eine Beschreibung der unterschiedlichen Umgebungsszenarien spezifisch sind,
- Erzeugen (103) von Textaufforderungen (70) auf Basis der bereitgestellten Metadaten (65), wobei in den Metadaten (65) enthaltenen Informationen für die Textaufforderungen (70) verwendet werden,
- Generieren (104) des Datensatzes (60) auf Basis der erzeugten Textaufforderungen (70) und vorzugsweise der bereitgestellten Bilddaten.

## Beschreibung

Die Erfindung betrifft ein Verfahren zum Generieren eines Datensatzes zum Training und/oder Testen eines maschinellen Lernsystems. Ferner betrifft die Erfindung ein Maschinenlernmodell, ein Computerprogramm, eine Vorrichtung sowie ein Speichermedium zu diesem Zweck.

### Stand der Technik

Aus dem Stand der Technik ist bekannt, dass bei der Erstellung synthetischer Bilder, z. B. durch generative Text-Bild-Modelle wie Stable Diffusion, erhebliche Fortschritte erzielt wurden. Diese Modelle können Bilder auf der Grundlage von Texteingaben erzeugen.

Allerdings sind die erzeugten Bilder für viele Anwendungen noch zu allgemein und nicht vielfältig genug. Das hängt häufig damit zusammen, dass die textlichen Aufforderungen, also Prompts, auf denen die Bildsynthese basiert, oft sehr kurze und unzureichende Beschreibungen von Szenarien enthalten.

Ferner sind aus dem Stand der Technik verschiedene weitere Ansätze im Zusammenhang mit der Bildsynthese bekannt, z. B. die Verwendung von VLP-Systemen (Vision-Language Pretraining).

Herkömmliche Lösungen sind darüber hinaus bekannt aus:
- Rombach et al., High-Resolution Image Synthesis with Latent Diffusion Models (arXiv:2112.10752), sowie
- Li et al. BLIP-2, Bootstrapping Language-Image Pre-training with Frozen Image Encoders and Large Language Models (arXiv:2301.12597).

### Offenbarung der Erfindung

Gegenstand der Erfindung ist ein Verfahren mit den Merkmalen des Anspruchs 1, ein Maschinenlernmodell mit den Merkmalen des Anspruchs 9, ein Computerprogramm mit den Merkmalen des Anspruchs 10, eine Vorrichtung mit den Merkmalen des Anspruchs 11 sowie ein computerlesbares Speichermedium mit den Merkmalen des Anspruchs 12. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Maschinenlernmodell, dem erfindungsgemäßen Computerprogramm, der erfindungsgemäßen Vorrichtung sowie dem erfindungsgemäßen computerlesbaren Speichermedium, und jeweils umgekehrt, so dass bezüglich der Offenbarung der Erfindung stets auch eine wechselseitige Bezugnahme möglich ist.

Gegenstand der Erfindung ist insbesondere ein Verfahren zum Generieren eines Datensatzes zum Training, insbesondere auch Fine-Tuning, und/oder Testen eines maschinellen Lernsystems, vorzugsweise des erfindungsgemäßen Maschinenlernmodells.

Das maschinelle Lernsystem kann wenigstens ein Maschinenlernmodell, vorzugsweise mit wenigstens einem neuronalen Netz, umfassen, welches durch den Datensatz getestet und/oder trainiert werden kann. Das zu trainierende und/oder zu testende Maschinenlernmodell kann bspw. zur Bildklassifizierung dienen.

Das maschinelle Lernsystem kann ferner ein generatives Modell umfassen, welches zur Erzeugung von synthetischen Bilddaten ausgebildet ist. Insbesondere handelt es sich bei dem generativen Modell um ein generatives Text-Bild-Modell wie Stable Diffusion.

Das Verfahren kann im Zusammenhang mit einer Fahrzeugsteuerung verwendet werden. Insbesondere dient das Verfahren hierbei dazu, Datensätze zu generieren, die für eine Entwicklung und/oder ein Verbessern einer Fahrzeugsteuerungssoftware verwendet werden. Dies kann ein maschinellen Lernen umfassen, sodass der generierte Datensatz zum Training und/oder Testen bei dem maschinellen Lernen verwendet wird.

Das erfindungsgemäße Verfahren kann ein Bereitstellen von Metadaten, insbesondere digitalen Metadaten, umfassen. Die Metadaten können für eine Beschreibung von unterschiedlichen Umgebungsszenarien, insbesondere einer Umgebung, vorzugsweise Fahrzeugumgebung, spezifisch sein. Die Beschreibung kann bspw. Angaben über einen Ort und/oder ein Wetter und/oder Fahrbedingungen und/oder dergleichen umfassen. Die Bereitstellung der Metadaten kann unter anderem durch ein Abrufen von einem Datenspeicher oder einer Datenschnittstelle möglich sein. Die Umgebungsszenarien können z. B. Anordnungen von verschiedenen Objekten und/oder eine Fahrbahnanordnung und/oder eine räumliche Struktur von Hindernissen und/oder Fahrbahnmarkierungen umfassen.

Die Metadaten können im Zusammenhang mit Bilddaten vorliegen, denen sie zugeordnet sind. Daher kann das erfindungsgemäße Verfahren ferner ein Bereitstellen von Bilddaten umfassen, welche für Abbildungen spezifisch sind, in welchen unterschiedliche Umgebungsszenarien dargestellt werden. Dies kann bspw. jeweils eine Abbildung einer Umgebung, vorzugsweise Fahrzeugumgebung, bevorzugt während der Fahrt, für die unterschiedlichen Umgebungsszenarien sein. Die Metadaten sind bspw. während der Aufzeichnung der Bilddaten entstanden, z. B. automatisiert und/oder manuell wie durch eine Fahrereingabe. Die Metadaten können bspw. einen Ort und/oder eine Zeit der Aufzeichnung der Bilddaten angeben. Ferner können die Metadaten automatisiert und/oder manuell ergänzt werden, z. B. um weitere Angaben zum Umgebungsszenario, in welchem die Bilddaten erfasst/aufgezeichnet worden sind. Dies kann z. B. das Ermitteln (wie ein Abrufen aus einer Datenbank) von Wetterinformationen sein, die zum Zeitpunkt der Aufzeichnung am Ort der Aufzeichnung vorgelegen haben.

Ferner kann das erfindungsgemäße Verfahren ein Erzeugen von Textaufforderungen (engl. Prompts) auf Basis der bereitgestellten Metadaten umfassen. Dabei können in den Metadaten enthaltenen Informationen (wie z. B. die Wetterinformationen) für die Textaufforderungen verwendet werden, insbesondere in die Textaufforderungen automatisiert transformiert werden und/oder bestehende Textaufforderungen anpassen.

Sodann kann bei dem erfindungsgemäßen Verfahren ein Generieren des Datensatzes auf Basis der erzeugten Textaufforderungen und vorzugsweise auch der bereitgestellten Bilddaten möglich sein, wobei das Generieren bevorzugt durch das maschinelle Lernsystem oder ein anderes generatives, maschinelles Lernsystem zur Daten- und insbesondere Bildsynthese erfolgt. Mit anderen Worten ist eine automatisierte Textgenerierung für die Erstellung von Prompts möglich, mit welchen Datensätze generiert werden können, die eine bessere Effizienz und/oder Qualität und/oder Varianz aufweisen. Dabei erfolgt vorzugsweise eine direkte Verwendung der Metadaten für die Textgenerierung, um automatisiert detaillierte sowie vielfältige Beschreibungen generiert kann. Der Datensatz kann z. B. durch ein generatives Modell, vorzugsweise generatives Text-Bild-Modell wie Stable Diffusion anhand der erzeugten Textaufforderungen generiert werden. Die bereitgestellten Bilddaten können optional ebenfalls als Trainings- und/oder Testdaten dienen oder zum Training und/oder Testen verwendet werden, z. B. zur weiteren Kontrolle der anhand der Textaufforderungen generierten Bilder.

Der Datensatz kann bspw. für ein Fine-Tuning und/oder für ein Training eines Maschinenlernmodells verwendet werden, mit welchem Bilddaten synthetisiert werden sollen. Auch ist es möglich, dass der Datensatz selbst bereits die synthetischen Bilddaten umfasst. Der Datensatz und/oder die synthetischen Bilddaten können bspw. für ein Training eines maschinellen Lernmodells verwendet werden, das zum autonomen Fahren eines Fahrzeuges und/oder zur Situationsinterpretation und/oder zur Perzeption bei einem autonomen Fahren dient. Das trainierte Modell findet somit bspw. Anwendung für KI-gesteuerte visuelle Erkennungssysteme.

Optional kann es vorgesehen sein, dass der generierte Datensatz mehrere Trainingsdaten für das Training und/oder Testen des maschinellen Lernsystems umfasst. Die Trainingsdaten können als Bilddaten, vorzugsweise synthetische Bilddaten, ausgeführt sein. Damit kann der generierte Datensatz bzw. können die Trainingsdaten es ermöglichen und/oder dazu ausgeführt sein, eine Darstellung, insbesondere einer Umgebung, in den unterschiedlichen und/oder auch neu generierten Umgebungsszenarien bereitstellen. Es können auf diese Weise vielfältige synthetische Bilder erzeugt werden, die anschließend für das Training und Finetuning von Bildmodellen wie Stable Diffusion zum Einsatz kommen.

Es ist weiter denkbar, dass das Training dafür vorgesehen ist, das maschinelle Lernsystem mittels des generierten Datensatzes zur Klassifizierung, insbesondere zur Bildklassifikation, von digitalen Bildern auf Grundlage von Bildpunkten und/oder -pixeln, vorzugsweise Kanten oder Pixelattribute, (der Bilder) zu trainieren. Diese digitalen Bilder können bspw. digitale Bilder sein, welche aus einer Aufzeichnung durch wenigstens einen Sensor, vorzugsweise wenigstens einer Kamera, bevorzugt eines Fahrzeuges und besonders bevorzugt einer Kamera- und/oder Fahrzeugumgebung während einer Fahrt (eines Fahrzeuges) resultieren. Die Aufzeichnung ist z. B. durch wenigstens eine Kamera des Fahrzeuges möglich. Dabei kann die Klassifizierung dafür vorgesehen sein, Objekte in einer durch die digitalen Bilder abgebildeten Umgebung zu erkennen und/oder eine Verkehrsszene zu erfassen.

Die Klassifizierung kann für verschiedene technische Anwendungen vorgesehen sein. Ein Beispiel ist die Anwendung im Fahrzeug. Auf Basis der Klassifizierung, insbesondere wenigstens eines Klassifizierungsergebnisses, kann bspw. wenigstens eine Steuerungsaktion, vorzugsweise für ein Fahrzeug oder für ein anderes technisches System, initiiert und/oder durchgeführt werden.

Ein Klassifizierungsergebnis kann zumindest eines der folgenden Ergebnisse umfassen und/oder für zumindest eines der folgenden Ergebnisse spezifisch sein: eine Kategorie von Objekten, eine Identifikation von Objekten, eine Position von Objekten und/oder Hindernissen (z. B. in Fahrtrichtung oder neben der Fahrtrichtung), eine Anwesenheit von Hindernissen, eine Beschreibung einer Verkehrsszene, eine Gefahrenmeldung, eine Anzahl von Objekten, eine Art und/oder Position von Fahrbahnmarkierungen und/oder eine Fahrbahnbegrenzung, eine Position und/oder ein Zustand von Verkehrssignalanlagen, eine Position einer Fahrbahn, oder dergleichen.

Auf Grundlage des Klassifizierungsergebnisses kann wenigstens eine Steuerungsaktion für das Fahrzeug initiiert und/oder durchgeführt werden. Die Steuerungsaktion kann zumindest eine der folgenden umfassen: ein Bremsen, ein Lenken, ein Beschleunigen, ein Überholmanöver, ein Notbremsen, eine Aktivierung einer Alarmanlage, eine Aktivierung einer Warnblinkanlage, eine Aktivierung eines Fahrtrichtungsanzeigers, eine Lichtsteuerung, oder dergleichen.

Durch die Klassifizierung kann z. B. ein Hindernis erkannt werden, unabhängig davon, ob dieses direkt in der Fahrtrichtung oder daneben liegt. Je nach Ortung (z. B. in Abhängigkeit von der voraussichtlichen Fahrzeugtrajektorie) kann eine entsprechende Steuerungsaktion wie ein Abbremsen oder Ausweichen initiiert werden.

Bspw. kann ferner eine Bremsung eingeleitet werden, wenn die Klassifizierung ergibt, dass sich Hindernisse in Fahrtrichtung befinden und/oder eine Kollision wahrscheinlich ist. Auch ist es denkbar, dass eine Fahrbahn und/oder eine Fahrbahnbegrenzung auf Basis der Klassifizierung erkannt werden, um das Fahrzeug durch die Steuerungsaktion zumindest teilweise automatisiert auf der Fahrbahn zu bewegen.

Das Fahrzeug kann als ein Kraftfahrzeug und/oder Personenkraftfahrzeug und/oder zumindest teilweise autonomes Fahrzeug ausgebildet sein.

Das erfindungsgemäße Verfahren kann den Vorteil haben, dass die Trainings- und/oder Testdaten mit einer hohen Variation - insbesondere bei der Darstellung verschiedener Umgebungsszenarien - generiert werden können. Dies kann die Zuverlässigkeit des Trainings und/oder des Testens und des daraus resultierenden trainierten Lernsystems für die Klassifikationsaufgabe verbessern. Das Testen kann z. B. im Rahmen des Trainings erfolgen, indem der generierte Datensatz in Test- und Trainingsdaten aufgeteilt wird und die Testdaten zur Überprüfung des Trainingsfortschrittes eingesetzt werden. Insbesondere kann durch eine hohe Variation bei dem Datensatz die Generalisierungsfähigkeit des Lernsystems verbessert werden, so dass die Klassifizierung auch in neuen Situationen z. B. für die Steuerung des Fahrzeuges eingesetzt werden kann.

Die "Klassifizierung" und "Bildklassifikation" kann auch eine "Objektdetektion" bzw. "Objektdetektion in Bildern" umfassen. Darunter ist insbesondere eine Klassifikation zu verstehen, ob sich in gewissen Bereichen des Bildes Objekte befinden, oder nicht. Außerdem können sich die Begriffe "Klassifizierung" und "Bildklassifikation" auch auf eine "semantische Segmentierung" beziehen, insbesondere in der Form einer pixelweisen Klassifikation.

Auch ist es optional denkbar, dass die Bilddaten und/oder Metadaten aus einer sensorischen Erfassung und vorzugsweise Bilderfassung einer Umgebung eines Fahrzeuges und/oder einer Kamera resultieren, und/oder aus einer Erfassung durch wenigstens einen Sensor, insbesondere Kamera, bevorzugt des Fahrzeuges, resultieren, bei welcher vorzugsweise die Metadaten zur Beschreibung des Umgebungsszenarios definiert worden sind. Damit wird der Vorteil erzielt, dass das Verfahren zur Generierung von Textaufforderungen eine große Anzahl verschiedener Umgebungsszenarios für die Bildsynthese berücksichtigen kann. Ebenfalls kann das Verfahren zuverlässiger und genauer sein, da die Beschreibungen auf präzisen Daten über die Umgebung basieren. Eine genauere Textbeschreibung für eine synthetische Bildgenerierung führt zu einer verbesserten Genauigkeit bei der Darstellung realistischer Umgebungen und Objekte in den generierten Bilddaten.

Es kann ferner möglich sein, dass das maschinelle Lernsystem (wenigstens) ein generatives Modell, vorzugsweise zur Erzeugung von synthetischen Bildern, und/oder (wenigstens) ein Maschinenlernmodell zur Verwendung bei einem zumindest teilweise autonomen Fahren umfasst. Das generierte synthetische Bildmaterial in den Bilddaten kann dann bspw. für die Trainings- oder Testdatensätze des maschinellen Lernmodells verwendet werden. Dieses Vorgehen minimiert den Aufwand und die Kosten für eine Datenerfassung bei gleichzeitiger Steigerung der Qualität und Menge der verfügbaren Daten, wodurch das Training des Lernsystems deutlich verbessert wird. Ein weiterer Vorteil ist die Flexibilität beim Anpassungsbedarf der Trainingsdaten.

Es kann möglich sein, dass das Bereitstellen der Bilddaten ferner umfasst: Bereitstellen der Bilddaten, welche aus einer sensorischen Erfassung resultieren, und welche durch die Metadaten ergänzt worden sind, vorzugsweise (manuell) durch einen Fahrer im Rahmen von Fahrten in dem jeweiligen Umgebungsszenario. Es ist somit möglich, dass die Bilddaten über die Metadaten mit zusätzlichen Informationen angereichert werden. Diese Ergänzung kann optional auch auf Datenquellen wie Fahrzeugkameras oder anderen Sensoren basieren, die während der Fahrt die Aufzeichnung der Bilddaten durchführen. Ebenfalls können Datenquellen zur Ermittlung der Metadaten dienen, welche nicht direkt für die sensorische Erfassung verwendet werden, z. B. ein Cloud-Server zur Ermittlung von Wetterdaten oder ein GPS-System. Der Fahrer kann ferner die oder weitere Metadaten auch manuell zur Verfügung stellen. Durch den Zugriff auf diese erweiterten Datenquellen kann eine umfassendere Darstellung der Umgebungsszenarien ermöglicht werden, was das Training und Testen des maschinellen Lernsystems weiter verbessert. Es erhöht ferner die Genauigkeit und Qualität der Textaufforderungen.

Es kann optional möglich sein, dass das Erzeugen der Textaufforderungen umfasst: Transformieren der in den Metadaten enthaltenen Informationen jeweils in einen Textprompt, um für den zu generierenden Datensatz, vorzugsweise umfassend mehrere zu generierende Bilder, wenigstens eine der folgenden Angaben aus den Metadaten zu berücksichtigen und bevorzugt in den Bildern darzustellen:
- Umweltbedingungen, insbesondere Wetter oder Tageszeit,
- Kontextdetails der Umgebung bzw. des jeweiligen Umgebungsszenarios, vorzugsweise Straßentyp oder Verkehrssituation,
- Lokalisationsinformationen, vorzugsweise aus einer GPS-Erfassung.

Dies hat den Vorteil, dass die generierten Textaufforderungen noch detaillierter werden und somit auch mehr Kontext für die zu generierenden Bilder liefern können.

Es kann im Rahmen der Erfindung vorgesehen sein, dass das Erzeugen der Textaufforderungen ferner ein Transformieren der Metadaten umfasst, bei welchem die Metadaten in strukturierte Textaufforderungen umgewandelt werden. Dabei können die Metadaten zufällig für die Transformation ausgewählt werden. Die Verwendung einer probabilistischer Herangehensweise gewährleistet eine hohe Diversität der Textaufforderungen. Dies hat den Vorteil, dass ebenfalls eine höhere Varianz des Datensatz erreicht werden kann.

Das Generieren des Datensatzes kann bevorzugt durch ein generatives Maschinenlernmodell erfolgen. Alternativ oder zusätzlich es denkbar, dass zum Generieren des Datensatzes die erzeugten Textaufforderungen mit einem bedingten räumlichen Layout ergänzt werden, um Bedingungen für eine Anwendung des maschinellen Lernsystems auch bei der Generierung des Datensatzes zu berücksichtigen. Daher kann durch die Kombination von erzeugten Textaufforderungen mit einem bedingten räumlichen Layout sichergestellt werden, dass eine realitätsnahe Darstellung der Umgebung erzeugt wird. Dies ermöglicht eine verbesserte und realistische Erzeugung des Datensatzes. Vorzugsweise kann dabei ein Kantenerkennungsverfahren zum Einsatz kommen.

Ebenfalls Gegenstand der Erfindung ist ein Maschinenlernmodell, welches aus einem Training durch (zumindest) die folgenden Schritte resultiert:
- Generieren eines Datensatzes durch ein erfindungsgemäßes Verfahren,
- Trainieren des Maschinenlernmodells zumindest mit dem generierten Datensatz.

Damit bringt das erfindungsgemäße Maschinenlernmodell die gleichen Vorteile mit sich, wie sie ausführlich mit Bezug auf ein erfindungsgemäßes Verfahren beschrieben worden sind.

Es ist möglich, dass das erfindungsgemäße Verfahren zur Herstellung eines zumindest teilweise autonomen Fahrsystems und/oder eines Fahrerassistenzsystems bei einem Fahrzeug zum Einsatz kommt. Das Fahrzeug kann bspw. als ein Kraftfahrzeug und/oder Personenkraftfahrzeug und/oder autonomes Fahrzeug ausgebildet sein. Das Fahrzeug kann eine Fahrzeugeinrichtung, bspw. zur Bereitstellung einer autonomen Fahrfunktion und/oder ein Fahrerassistenzsystem aufweisen. Die Fahrzeugeinrichtung kann dazu ausgeführt sein, das Fahrzeug zumindest teilweise automatisch zu steuern, insbesondere zu beschleunigen und/oder abzubremsen und/oder zu lenken. Hierzu kann die Steuerung auf Basis eines Outputs des maschinellen Lernsystems, vorzugsweise des erfindungsgemäßen Maschinenlernmodells, erfolgen.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. ein Computer vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm aufweist und/oder Befehle umfasst, die bei der Ausführung durch einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein. Alternativ oder zusätzlich kann zumindest einer der offenbarten Verfahrensschritte computer-implementiert sein und/oder automatisiert durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Visualisierung eines Verfahrens, einer Vorrichtung, eines Maschinenlernmodells, eines Speichermediums sowie eines Computerprogramms gemäß Ausführungsbeispielen der Erfindung.
- Fig. 2: eine schematische Darstellung zur Visualisierung eines Verfahren nach Ausführungsbeispielen der Erfindung.
- Fig. 3: eine weitere schematische Darstellung zur Visualisierung eines Verfahren nach Ausführungsbeispielen der Erfindung.

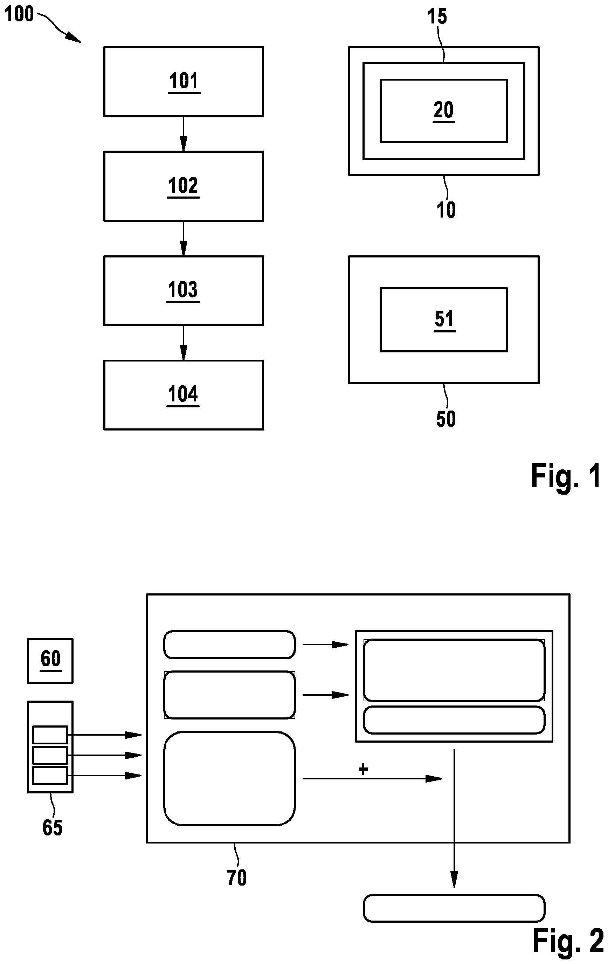

In Fig. 1 sind ein Verfahren 100, eine Vorrichtung 10, ein Maschinenlernmodell 51, ein Speichermedium 15 sowie ein Computerprogramm 20 gemäß Ausführungsbeispielen der Erfindung schematisch dargestellt.

Das dargestellte Verfahren 100 dient dabei zur Generierung eines Datensatzes 60 zum Training und/oder Testen eines maschinellen Lernsystems 50.

Gemäß einem ersten Verfahrensschritt 101 erfolgt ein Bereitstellen von den Bilddaten, welche für Abbildungen spezifisch sind, in welchen unterschiedliche Umgebungsszenarien dargestellt werden.

Gemäß einem zweiten Verfahrensschritt 102 erfolgt ein Bereitstellen von Metadaten 65, welche für eine Beschreibung der unterschiedlichen Umgebungsszenarien spezifisch sind. Dabei können die Metadaten 65 konkrete Angaben über die Umgebung umfassen, welche durch aufgezeichnete Bilddaten abgebildet wird. Auch können die Metadaten 65 konkrete Angaben machen zu den Bedingungen, unter denen die Aufzeichnung stattgefunden hat. Es handelt sich hierbei insbesondere um während der Aufzeichnung erfasste Angaben über die reale Aufzeichnungssituation.

Sodann kann gemäß einem dritten Verfahrensschritt 103 ein Erzeugen von Textaufforderungen 70 auf Basis der bereitgestellten Metadaten 65 erfolgen, um in den Metadaten 65 enthaltenen Informationen für die Textaufforderungen 70 zu verwenden. Geht aus den Metadaten 65 bspw. hervor, dass es während der Aufzeichnung geschneit oder geregnet hat, kann dies in der entsprechenden Textaufforderung 70 aufgenommen werden.

Weiter ist gemäß einem vierten Verfahrensschritt 104 ein Generieren des Datensatzes 60 auf Basis der erzeugten Textaufforderungen 70 und vorzugsweise der bereitgestellten Bilddaten möglich.

Fig. 2 zeigt ferner eine grafische Beschreibung von Ausführungsvarianten der Erfindung. Im Rahmen von Ausführungsbeispielen kann dabei die Synergie von Modellen wie Stable Diffusion und ControlNet genutzt werden, um synthetische Bilder zu erstellen, die denen ähneln, die mit Fahrzeugkameras aufgenommen wurden.

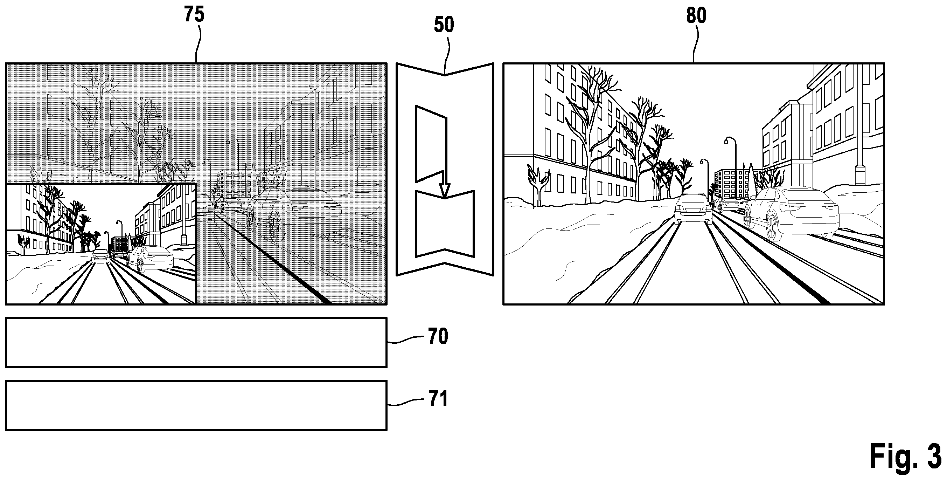

Die synthetischen Bilder 80 können jeweils mit Hilfe von den folgenden primären Eingaben erstellt werden:
- einem bedingten räumlichen Layout (engl.: conditional spatial layout), das in erster Linie mit Hilfe von Kantenerkennungsverfahren wie Canny strukturiert wird (vgl. Fig. 3, in welcher eine Edge Map 75 dargestellt ist), und
- einer beschreibenden Textaufforderung (engl. descriptive text prompt) zur Definition übergreifender Bildmerkmale, wie z. B. einer verschneiten Straße und dergleichen,
- optional weiterem Input 71 wie zufälliges Rauschen.

Die Textaufforderungen können ggf. automatisch mit Hilfe automatischer Annotationen wie BLIP erzeugt werden (s. zitierte Literatur zum Stand der Technik). Diese Annotationen sind jedoch in der Regel sehr kurz und nicht detailliert genug, was zu einer schlechteren Generierung von Bildern führt. Ausführungsvarianten der Erfindung können daher einen Beitrag in diesem Bereich leisten, indem verbesserte und detailliertere Textbeschreibungen erstellt werden. Hierzu können verfügbare Metadaten für eine bessere (vielfältigere und genauere) Bilderzeugung auf der Grundlage von beschreibenden und detaillierten Textaufforderungen genutzt werden.

Ein Problem von herkömmlichen Lösungen, das mit Ausführungsvarianten der Erfindung angegangen wird, ist die Erzeugung synthetischer Bilder, denen es aufgrund der Beschränkungen aktueller Textaufforderungsmethoden oft an Vielfalt und Spezifität fehlt. Herkömmliche Text-Bild-Modelle erzeugen oft Bilder, die zu allgemein oder nicht ausreichend vielfältig sind, um fortgeschrittene Kl-Wahrnehmungsmodelle effektiv zu trainieren. Darüber hinaus ist die Abhängigkeit von manuellen Annotationen zur Erstellung von Textbeschreibungen oft zu ineffizient und für große Datensätze nicht skalierbar.

Ausführungsbeispiele der Erfindung können diese Probleme zumindest teilweise lösen, indem ein in Fig. 1 beispielhaft visualisiertes Verfahren 100 zur Erstellung von Textaufforderungen (Prompts) bereitgestellt wird, welches die verfügbaren Metadaten in aufgezeichneten Datensätzen nutzt. Dieser Ansatz stellt sicher, dass die generierten Textaufforderungen sowohl vielfältig als auch spezifisch sind, was zur Erstellung von synthetischen Bildern führt, die repräsentativer für reale Szenarien und vielfältig genug sind, um robuste KI-Modelle zu trainieren.

Durch die Nutzung detaillierter Metadaten kann ferner der Prozess der Prompt-Erstellung automatisiert werden, was die Effizienz erhöht und die Abhängigkeit von manuellen Bemühungen oder automatisierten Methoden, die die oben genannten Kriterien nicht erfüllen, verringert. Das Problem der begrenzten Vielfalt und Spezifität herkömmlicher Methoden sowie der Ineffizienz der manuellen Annotation wird durch diesen Ansatz zur metadatenbasierten Prompt-Entwicklung zumindest teilweise gelöst.

Ausführungsbeispiele der Erfindung stellen ferner einen Ansatz für das Prompt-Engineering bereit, der ausschließlich mit Bildern verbundene Metadaten nutzt. Mit anderen Worten können bei dem Verfahren gemäß Ausführungsbeispielen der Erfindung die bereitgestellten Metadaten die einzige Datengrundlage für die Erzeugung der Textaufforderungen sein.

Das Verfahren gemäß Ausführungsbeispielen der Erfindung umfasst ferner die Extraktion und Umwandlung von Metadateninformationen (wie Tageszeit, Straßentyp und Wetterbedingungen) in strukturierte Textaufforderungen. Diese Methode stellt sicher, dass die Textaufforderungen nicht nur genau sind, sondern auch ein breites Spektrum von Bildmerkmalen umfassen, wodurch die Vielfalt und Spezifität der generierten Bilder erhöht wird.

### I. Sammlung von Metadaten

Gemäß einer ersten Möglichkeit kann der metadatenbasierende Prompt-Engineering-Ansatz eine umfangreiche Datenbank mit Metadaten für die Bereitstellung nutzen, die in derartigen Anwendungsfällen regelmäßig mit hoher Sorgfalt zusammengestellt und aktualisiert worden ist. Dies erfolgt oft durch manuelle Eingaben von Fahrern, die die Daten in Fahrten bei verschiedenen Umgebungsbedingungen gesammelt haben. Diese Metadaten umfassen ein breites Spektrum an Informationen, die für die Bilder relevant sein können, wie z. B. Umgebungsbedingungen, geografische Standorte, Tageszeit und bestimmte Ereignisse oder Umstände, die während der Datenerfassung aufgetreten sind.

Verfahren 100 gemäß Ausführungsbeispielen der Erfindung können dabei die Metadaten bei dem in Fig. 1 dargestellten Bereitstellungsschritt 101 extrahieren, um sie als Grundlage für die Textaufforderungen zu verwenden. Die Metadaten können sodann sorgfältig analysiert werden, um ihre Relevanz und Genauigkeit bei der Darstellung des Bildkontextes sicherzustellen. Wenn die Metadaten beispielsweise darauf hinweisen, dass ein Bild an einem regnerischen Abend in einem Vorort aufgenommen wurde, kann gemäß dem Verfahren 100 eine Textaufforderung (Prompt) erstellt werden, die diese Bedingungen genau wiedergibt. Der Prozess umfasst bspw. die Kategorisierung und Priorisierung von Metadatenelementen, um eine kohärente und detaillierte Beschreibung zu erstellen.

### II. Probabilistische Randomisierung

Um die Vielfalt zu erhöhen und Redundanz in den Textaufforderungen zu vermeiden, können zusätzlich probabilistischer Modelle verwendet werden. Diese Modelle können nach dem Zufallsprinzip verschiedene Metadatenelemente auswählen und sie kombinieren, um sicherzustellen, dass jeder Prompt möglichst einzigartig ist und eine breite Palette möglicher Szenarien widerspiegelt. Diese Zufälligkeit ist entscheidend für die Generierung einer Vielzahl von Bildbeschreibungen, die für das effektive Training und die Feinabstimmung (Fine-Tuning) der generativen Modelle vorteilhaft ist.

Durch die Verwendung von Metadaten, die von den Fahrern gesammelt wurden, bietet der beschriebene Ansatz nicht nur ein hohes Maß an Genauigkeit und Relevanz in den Textaufforderungen, sondern trägt auch zur Erstellung eines umfangreichen und vielfältigen Datensatzes bei. Dieser Datensatz ist von hohem Wert für die Verbesserung der Fähigkeiten von Text-Bild-Modellen (engl. text-to-image models) und ermöglicht es, präzisere und vielfältigere Bilder zu erzeugen, die die Komplexität realer Szenarien besser widerspiegeln.

Dieser metadatenbasierte Prompt-Engineering-Ansatz bietet mehrere bedeutende Vorteile:
- Es kann die Genauigkeit der Textbeschreibungen durch die direkte Nutzung der Metadaten verbessert werden. Die Metadaten können dabei die spezifische und sachliche Informationen über die Bilder widerspiegeln.
- Es kann die Vielfalt der Textprompts erheblich erhöht werden, da Metadaten oft eine breite Palette von Bildmerkmalen umfassen, von Umgebungsbedingungen bis hin zu kontextbezogenen Details.
- Es kann zur Automatisierung und Rationalisierung des Prozesses der Erstellung detaillierter und vielfältiger Textbeschreibungen für Bilddatensätze beitragen.

Mögliche Anwendungen von Ausführungsvarianten der Erfindung sind die Verbesserung des Trainings und der Feinabstimmung von Text-Bild-Modellen wie Stable Diffusion. Durch die Bereitstellung einer Methode zur Erzeugung vielfältiger und detaillierter Text-Bild-Paare kann ferner nicht nur die Qualität und Variabilität der erzeugten Bilder verbessert werden, sondern auch ein Beitrag zur Weiterentwicklung von Techniken zur Datenerweiterung und zur Entwicklung anspruchsvollerer generativer Modelle bereitgestellt werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren (100) zum Generieren eines Datensatzes (60) zum Training und/oder Testen eines maschinellen Lernsystems (50), umfassend:
- Bereitstellen (101) von Bilddaten, welche für Abbildungen spezifisch sind, in welchen unterschiedliche Umgebungsszenarien dargestellt werden,
- Bereitstellen (102) von Metadaten (65), welche für eine Beschreibung der unterschiedlichen Umgebungsszenarien spezifisch sind,
- Erzeugen (103) von Textaufforderungen (70) auf Basis der bereitgestellten Metadaten (65), wobei in den Metadaten (65) enthaltenen Informationen für die Textaufforderungen (70) verwendet werden,
- Generieren (104) des Datensatzes (60) auf Basis der erzeugten Textaufforderungen (70) und vorzugsweise der bereitgestellten Bilddaten.

2. Verfahren (100) nach Anspruch 1,
**dadurch gekennzeichnet,**
**dass** der generierte Datensatz (60) ein Trainingsdatensatz ist, welcher mehrere synthetische Bilddaten für das Training des maschinellen Lernsystems (50) umfasst, um eine Darstellung der unterschiedlichen und/oder neu generierten Umgebungsszenarien für das Training bereitzustellen.

3. Verfahren (100) nach Anspruch 2,
**dadurch gekennzeichnet,**
**dass** das Training dafür vorgesehen ist, das maschinelle Lernsystem (50) mittels des generierten Datensatzes (60) zur Klassifizierung von digitalen Bildern auf Grundlage von Bildpunkten und/oder -pixeln zu trainieren, insbesondere von digitalen Bildern, welche aus einer Aufzeichnung einer Umgebung eines Fahrzeuges während der Fahrt resultieren und/oder durch eine Kamera resultieren, wobei bevorzugt auf Basis der Klassifizierung eine Steuerung des Fahrzeuges vorgesehen ist.

4. Verfahren (100) nach einem der vorhergehenden Ansprüche,
**dadurch gekennzeichnet,**
**dass** die Metadaten (65) aus einer sensorischen Erfassung und vorzugsweise Bilderfassung durch wenigstens einen Sensor, insbesondere wenigstens einer Kamera, bevorzugt eines Fahrzeuges, resultieren, bei welcher die Metadaten (65) zur Beschreibung des Umgebungsszenarios definiert worden sind.

5. Verfahren (100) nach einem der vorhergehenden Ansprüche,
**dadurch gekennzeichnet,**
**dass** das maschinelle Lernsystem (50) ein generatives Modell, vorzugsweise zur Erzeugung von synthetischen Bildern, und/oder ein Maschinenlernmodell zur Verwendung bei einem zumindest teilweise autonomen Fahren umfasst.

6. Verfahren (100) nach einem der vorhergehenden Ansprüche,
**dadurch gekennzeichnet,**
**dass** das Bereitstellen (101) der Bilddaten ferner umfasst:
- Bereitstellen der Bilddaten, welche aus einer sensorischen Erfassung resultieren, und welche durch die Metadaten (65) ergänzt worden sind, vorzugsweise durch einen Fahrer im Rahmen von Fahrten in dem jeweiligen Umgebungsszenario.

7. Verfahren (100) nach einem der vorhergehenden Ansprüche,
**dadurch gekennzeichnet,**
**dass** das Erzeugen (103) der Textaufforderungen (70) ferner umfasst:
Transformieren der in den Metadaten (65) enthaltenen Informationen jeweils in einen Textprompt, um für den zu generierenden Datensatz, vorzugsweise umfassend mehrere zu generierende Bilder, wenigstens eine der folgenden Angaben aus den Metadaten (65) zu berücksichtigen und bevorzugt in den Bildern darzustellen:
- Umweltbedingungen, insbesondere Wetter oder Tageszeit,
- Kontextdetails des jeweiligen Umgebungsszenarios, vorzugsweise Straßentyp oder Verkehrssituation,
- Lokalisationsinformationen, vorzugsweise aus einer GPS-Erfassung.

8. Verfahren (100) nach einem der vorhergehenden Ansprüche,
**dadurch gekennzeichnet,**
**dass** das Erzeugen (103) der Textaufforderungen (70) ferner ein Transformieren der Metadaten (65) umfasst, bei welchem die Metadaten (65) in strukturierte Textaufforderungen umgewandelt werden, wobei die Metadaten (65) zufällig für die Transformation ausgewählt werden.

9. Verfahren (100) nach einem der vorhergehenden Ansprüche,
**dadurch gekennzeichnet,**
**dass** zum Generieren (104) des Datensatzes, vorzugsweise durch ein generatives Maschinenlernmodell, die erzeugten Textaufforderungen (70) mit einem bedingten räumlichen Layout ergänzt werden, um Bedingungen für eine Anwendung des maschinellen Lernsystems (50) bei der Generierung des Datensatzes zu berücksichtigen.

10. Maschinenlernmodell (51), welches aus einem Training durch die folgenden Schritte resultiert:
- Generieren eines Datensatzes (60) durch ein Verfahren (100) nach einem der vorhergehenden Ansprüche,
- Trainieren des Maschinenlernmodells (51) zumindest mit dem generierten Datensatz (60).

11. Computerprogramm (20), umfassend Befehle, die bei der Ausführung des Computerprogramms (20) durch einen Computer (10) diesen veranlassen, das Verfahren (100) nach einem der Ansprüche 1 bis 9 auszuführen.

12. Vorrichtung (10) zur Datenverarbeitung, die eingerichtet ist, das Verfahren (100) nach einem der Ansprüche 1 bis 9 auszuführen.

13. Computerlesbares Speichermedium (15), umfassend Befehle, die bei der Ausführung durch einen Computer (10) diesen veranlassen, die Schritte des Verfahrens (100) nach einem der Ansprüche 1 bis 9 auszuführen.

## Geänderte Patentansprüche

### Geänderte Patentansprüche gemäss Regel 137(2) EPÜ.

1. Verfahren (100) zum Generieren eines Datensatzes (60) zum Training und/oder Testen eines maschinellen Lernsystems (50), umfassend:
- Bereitstellen (101) von Bilddaten, welche für Abbildungen spezifisch sind, in welchen unterschiedliche Umgebungsszenarien dargestellt werden,
- Bereitstellen (102) von Metadaten (65), welche für eine Beschreibung der unterschiedlichen Umgebungsszenarien spezifisch sind, wobei die Metadaten (65) aus einer sensorischen Erfassung durch wenigstens einen Sensor resultieren, bei welcher die Metadaten (65) zur Beschreibung des Umgebungsszenarios definiert worden sind,
- Erzeugen (103) von Textaufforderungen (70) auf Basis der bereitgestellten Metadaten (65), wobei in den Metadaten (65) enthaltenen Informationen für die Textaufforderungen (70) verwendet werden,
- Generieren (104) des Datensatzes (60) auf Basis der erzeugten Textaufforderungen (70) und vorzugsweise der bereitgestellten Bilddaten, wobei das Erzeugen (103) der Textaufforderungen (70) ferner ein Transformieren der Metadaten (65) umfasst, bei welchem die Metadaten (65) in strukturierte Textaufforderungen umgewandelt werden, wobei die Metadaten (65) zufällig für die Transformation ausgewählt werden.

2. Verfahren (100) nach Anspruch 1,
**dadurch gekennzeichnet,**
**dass** der generierte Datensatz (60) ein Trainingsdatensatz ist, welcher mehrere synthetische Bilddaten für das Training des maschinellen Lernsystems (50) umfasst, um eine Darstellung der unterschiedlichen und/oder neu generierten Umgebungsszenarien für das Training bereitzustellen.

3. Verfahren (100) nach Anspruch 2,
**dadurch gekennzeichnet,**
**dass** das Training dafür vorgesehen ist, das maschinelle Lernsystem (50) mittels des generierten Datensatzes (60) zur Klassifizierung von digitalen Bildern auf Grundlage von Bildpunkten und/oder -pixeln zu trainieren, insbesondere von digitalen Bildern, welche aus einer Aufzeichnung einer Umgebung eines Fahrzeuges während der Fahrt resultieren und/oder durch eine Kamera resultieren, wobei bevorzugt auf Basis der Klassifizierung eine Steuerung des Fahrzeuges vorgesehen ist.

4. Verfahren (100) nach einem der vorhergehenden Ansprüche,
**dadurch gekennzeichnet,**
**dass** die Metadaten (65) aus einer Bilderfassung durch wenigstens eine Kamera eines Fahrzeuges resultieren, bei welcher die Metadaten (65) zur Beschreibung des Umgebungsszenarios definiert worden sind.

5. Verfahren (100) nach einem der vorhergehenden Ansprüche,
**dadurch gekennzeichnet,**
**dass** das maschinelle Lernsystem (50) ein generatives Modell, vorzugsweise zur Erzeugung von synthetischen Bildern, und/oder ein Maschinenlernmodell zur Verwendung bei einem zumindest teilweise autonomen Fahren umfasst.

6. Verfahren (100) nach einem der vorhergehenden Ansprüche,
**dadurch gekennzeichnet,**
**dass** das Bereitstellen (101) der Bilddaten ferner umfasst:
- Bereitstellen der Bilddaten, welche aus einer sensorischen Erfassung resultieren, und welche durch die Metadaten (65) ergänzt worden sind, vorzugsweise durch einen Fahrer im Rahmen von Fahrten in dem jeweiligen Umgebungsszenario.

7. Verfahren (100) nach einem der vorhergehenden Ansprüche,
**dadurch gekennzeichnet,**
**dass** das Erzeugen (103) der Textaufforderungen (70) ferner umfasst: Transformieren der in den Metadaten (65) enthaltenen Informationen jeweils in einen Textprompt, um für den zu generierenden Datensatz, vorzugsweise umfassend mehrere zu generierende Bilder, wenigstens eine der folgenden Angaben aus den Metadaten (65) zu berücksichtigen und bevorzugt in den Bildern darzustellen:
- Umweltbedingungen, insbesondere Wetter oder Tageszeit,
- Kontextdetails des jeweiligen Umgebungsszenarios, vorzugsweise Straßentyp oder Verkehrssituation,
- Lokalisationsinformationen, vorzugsweise aus einer GPS-Erfassung.

8. Verfahren (100) nach einem der vorhergehenden Ansprüche,
**dadurch gekennzeichnet,**
**dass** zum Generieren (104) des Datensatzes, vorzugsweise durch ein generatives Maschinenlernmodell, die erzeugten Textaufforderungen (70) mit einem bedingten räumlichen Layout ergänzt werden, um Bedingungen für eine Anwendung des maschinellen Lernsystems (50) bei der Generierung des Datensatzes zu berücksichtigen.

9. Maschinenlernmodell (51), welches aus einem Training durch die folgenden Schritte resultiert:
- Generieren eines Datensatzes (60) durch ein Verfahren (100) nach einem der vorhergehenden Ansprüche,
- Trainieren des Maschinenlernmodells (51) zumindest mit dem generierten Datensatz (60).

10. Computerprogramm (20), umfassend Befehle, die bei der Ausführung des Computerprogramms (20) durch einen Computer (10) diesen veranlassen, das Verfahren (100) nach einem der Ansprüche 1 bis 8 auszuführen.

11. Vorrichtung (10) zur Datenverarbeitung, die eingerichtet ist, das Verfahren (100) nach einem der Ansprüche 1 bis 8 auszuführen.

12. Computerlesbares Speichermedium (15), umfassend Befehle, die bei der Ausführung durch einen Computer (10) diesen veranlassen, die Schritte des Verfahrens (100) nach einem der Ansprüche 1 bis 8 auszuführen.
